**Europäisches Patentamt**

**European Patent Office**

**Office européen des brevets**

(11) Numéro de publication : **0 224 534 B1**

(12) **FASCICULE DE BREVET EUROPEEN**

(45) Date de publication du fascicule du brevet :
**17.04.91 Bulletin 91/16**

(51) Int. Cl.⁵ : **A01G 13/02**

(21) Numéro de dépôt : **86903417.3**

(22) Date de dépôt : **03.06.86**

(86) Numéro de dépôt international :
**PCT/FR86/00187**

(87) Numéro de publication internationale :
**WO 86/07235 18.12.86 Gazette 86/27**

(54) **PROCEDE ET ELEMENT DE FILTRE ACTIF POUR EMPECHER LE DEVELOPPEMENT DES PLANTES.**

(30) Priorité : **04.06.85 FR 8508385**

(43) Date de publication de la demande :
**10.06.87 Bulletin 87/24**

(45) Mention de la délivrance du brevet :
**17.04.91 Bulletin 91/16**

(84) Etats contractants désignés :
**BE DE IT**

(56) Documents cités :
**FR-A- 1 399 567**
**FR-A- 2 013 738**

(73) Titulaire : **Gravisse, Philippe**
**18 - 20, rue de Presles**
**F-75015 Paris (FR)**

(72) Inventeur : **Gravisse, Philippe**
**18 - 20, rue de Presles**
**F-75015 Paris (FR)**

## Description

La présente invention concerne un procédé pour empêcher sur un plan de culture le développement des plantes ainsi qu'un élément de filtre actif pour la mise en oeuvre du procédé selon l'invention.

Pour empêcher le développement des plantes dans les champs ou sur d'autres plans de culture en serre ou en laboratoire, on utilise souvent la technique antérieure des produits chimiques herbicides enfouis dans le sol du plan de culture. Parmi ces produits, on connait des désherbants empêchant le développement de toute végétation et des herbicides sélectifs n'agissant que sur des espèces prédéterminées tout en permettant le développement d'autre espèces que l'on souhaite cultiver.

Ces produits chimiques sont aujourd'hui utilisés à une très grande échelle et leur emploi pose des problèmes graves. La quasi-totalité de ces produits sont des produits toxiques dangereux pour la faune naturelle et pour l'homme qui consomme des produits alimentaires préparés à partir de plantes cultivées avec l'utilisation de ces produits. On sait qu'un grand nombre de ces produits s'accumulent dans l'organisme d'animaux et de l'homme sans être éliminés naturellement et mettent ainsi en danger la survie même de nombreuses espèces. De plus, on a observé que la resistance des plantes à ces produits augmente au fur et à mesure de leur utilisation de sorte qu'on est amené à augmenter les dosages de produits herbicides d'année en année pour obtenir les résultats recherchés.

La présente invention a pour objet de concevoir un procédé pour empêcher le développement des plantes qui ne comprend plus l'utilisation de produits chimiques enfouis dans le sol du plan de culture et qui sont absorbés par les plantes et/ou la faune environnante.

Le procédé selon la présente invention consiste à éliminer dans le spectre du rayonnement lumineux au moins l'une des deux bandes de longueurs d'ondes qui favorisent la photosynthèse et situées la première entre 4200 Å et 4900 Å et la deuxième entre 6000 Å et 7000 Å.

Grâce à ce procédé, le rayonnement lumineux arrivant au niveau des plantes, ne comporte plus de bandes de longueurs d'ondes permettant le déroulement normal de la photosynthèse dans l'organisme végétal ce qui conduit à un déssèchement rapide des plantes et à un arrêt total de la croissance.

Le procédé selon l'invention peut être mis en oeuvre grâce à des filtres passifs réfléchissant simplement le rayonnement dans les bandes de longueurs d'ondes favorisant la photosynthèse. Le procédé selon l'invention consiste à transformer le rayonnement lumineux d'au moins l'une desdites bandes de longueurs d'ondes en un rayonnement dont les longueurs d'ondes ne sont comprises ni dans ladite première ni dans ladite deuxième bande de longueurs d'ondes. De cette manière, l'énergie du rayonnement lumineux n'est pas perdue mais le cas échéant, utilisée pour produire de la chaleur ce qui accélère encore le processus de destruction de la végétation.

L'invention concerne également un élément de filtre actif pour la mise en oeuvre de la deuxième variante du procédé selon l'invention. L'élément selon l'invention est constitué d'une feuille d'une matrice organique contenant au moins une matière luminescente et/ou fluorescente formant une cascade lumineuse pour absorber le rayonnement incident d'au moins l'une des deux dites bandes de longueurs d'ondes pour la réémettre dans une bande d'émission de longueurs d'ondes différente, couvrant des longueurs d'ondes défavorisant la photosynthèse des plantes.

De telles cascades lumineuses sont connues et déjà décrites dans les brevets français n° 76 09321 et 81 16678 du déposant.

Suivant un mode de réalisation préféré de l'élément selon l'invention les matières formant ladite "cascade lumineuse" comprennent une première matière cyclique aromatique dont la bande d'absorption couvre des longueurs d'ondes de 4200 Å à 4900 Å et la bande d'émission des longueurs d'ondes de 4900 Å à 6000 Å. Avantageusement, les matières formant ladite "cascade lumineuse" comprennent une deuxième matière cyclique aromatique dont la bande d'absorption couvre des longueurs d'ondes de 6000 Å à 7000 Å et la bande d'émission des longueurs d'ondes supérieures 7000 Å et dans ce cas, la concentration de ladite première matière cyclique aromatique est d'environ $2$ à $5 \times 10^{-3}$ mol/l et la concentration de ladite deuxième matière cyclique aromatique est d'environ $2$ à $5 \times 10^{-3}$ mol/l.

Suivant un mode de réalisation particulièrement efficace, expérimenté par le déposant, ladite première matière cyclique est un mélange de deux composants dont le premier comprend au moins l'un des produits suivants :

Uvitex OB®
Vert Hostasol G®
Caumarin 102®
et le deuxième au moins l'un des produits suivants :
Jaune Hostasol 3B®
Jaune Hostasol 3G®

Caumarin 153®

Suivant une variante de l'invention, ladite matière cyclique est un mélange de deux composants dont le premier comprend au moins l'un des produits suivants :

Rouge Hostasol 5B®
Rhodamine B®
Sulforodamine B®
et le deuxième au moins l'un des produits suivants :
Rhodamine 700®
Oxazine 1®
Oxazine 750®
Furan 6®
L D S 821®

L'élément selon l'invention peut se présenter sous la forme d'un filtre d'une épaisseur de l'ordre de 50 à 100 μ et être réalisé en polyuréthane en chlorure de polyvinyl ou en une matière plastique équivalente, dopée avec ladite matière cyclique aromatique.

D'autres réalisations et avantages de l'invention ressortiront de la description qui va suivre et en se référant aux dessins annexés sur lesquels :

la figure 1 est un diagramme montrant, d'une manière simplifiée le spectre du rayonnement solaire,

la figure 2 est un diagramme montrant l'absorption de l'énergie photonique par la photosynthèse des plantes en fonction de la longueur d'ondes de la lumière incidente,

la figure 3 est un diagramme montrant l'effet de la cascade lumineuse utilisée dans une feuille selon l'invention et

la figure 4 est un diagramme montrant le spectre de la lumière après son passage à travers un mode de réalisation préféré de la feuille herbicide selon la présente invention.

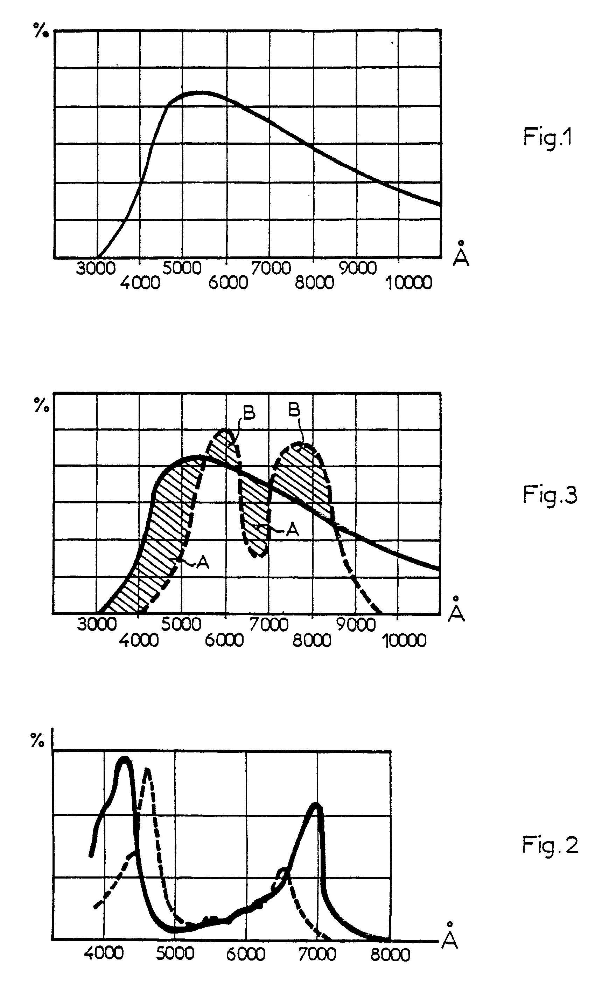

La figure 1 montre le spectre du rayonnement solaire et comme on le sait seulement une partie tris limitée de ce spectre favorise la photosynthèse des plantes ainsi que leur développement.

A la figure 2, on voit, en pourcentage de l'énergie totale absorbée, l'énergie absorbée par le processus de photosynthèse des plantes en fonction de la longueur d'ondes du rayonnement incident. La courbe en trait plein concerne la photosynthèse pour la production de la chlorophylle A tandis que la courbe en tirets concerne la photosynthèse pour la production de la photosynthèse B. A cette figure, on voit très clairement qu'il existe des plages ou bandes de longueurs d'ondes dans lesquelles les deux processus de photosynthèse absorbent la quasi totalité de leur énergie. La première plage se situe environ entre 4000 Å et 5000 Å et la deuxième plage environ entre 6000 Å et 7000 Å.

Suivant l'invention, on élimine du spectre du rayonnement incident la lumière dont la longueur d'ondes est comprise dans l'une ou l'autre ou dans les deux plages c'est-à-dire entre 4000 Å et 5000 Å et/ou 6000 Å et 7000 Å.

De cette manière, la lumière obtenue arrivant au sol ou sur un plan de culture ne contient aucun rayonnement pouvant favoriser l'un ou l'autre desdits processus de photosynthèse de sorte que les plantes qui tendraient à se développer sous cette lumière périraient très rapidement. La pratique a démontré que l'élimination de seulement l'une desdites bandes de longeurs d'ondes dans la lumière incidente est suffisante pour obtenir ce résultat.

Pour ne pas perdre, dans le cas du rayonnement solaire, l'énergie du rayonnement éliminée suivant l'invention, on utilise dans la pratique des cascades lumineuses inventées également par la présente déposante.

Ces cascades lumineuses permettent d'absorber la lumière dans une première bande de longueur d'ondes pour la réémettre dans une deuxième bande de longueur d'ondes.

Suivant l'invention, on utilise une cascade lumineuse qui absorbe de la lumière dans une première bande de longueur d'ondes comprise entre 4000 Å et 5000 Å pour la réémettre dans une bande comprise entre 5000 Å et 6000 Å. La cascade lumineuse peut également absorber de la lumière dans une bande de longueur d'ondes comprise entre 6000 Å et 7000 Å pour la réémettre à des longueurs d'ondes supérieures à 7000 Å. La cascade lumineuse peut également combiner ces deux effets.

L'invention concerne également un élément filtrant actif pour la mise en oeuvre du procédé selon l'invention. Cet élément se présente sous la forme d'une feuille ou plaque d'une matière plastique notamment en chlorure de polyvinyl ou en polyethylène contenant des matières de dopage formant une cascade lumineuse présentant les caractéristiques exposées ci-dessus.

Ces matières de dopage sont des matières luminescentes et/ou fluorescentes, présentes en dispersion dans la feuille ou plaque. Suivant l'invention, les matières assurant le premier effet d'absorption/émission (4000 Å à 5000 Å - 5000 Å à 6000 Å) sont des matières cycliques aromatiques du type à noyaux. Leur concentration est de l'ordre de 2 à 5 × 10³ mole/l.

Les matières assurant le deuxième effet absorption/emission (6000 Å à 7000 Å - supérieur à 7000 Å) sont des matières cycliques aromatiques de 4 à 6 noyaux. La concentration de ces matières est de l'ordre de 2 à 5 × 10⁻³ mol/l.

La figure 3 illustre l'effet d'une cascade lumineuse contenant des matières de dopage du premier et deuxième types par référence au spectre du rayonnement solaire. On voit à cette figure clairement les effets d'absorption representés en A et les effets de réémission représentés en B et ainsi le transfert d'énergie d'une bande de longueur d'ondes dans une deuxième bande de longueur d'ondes obtenue selon l'invention.

La déposante a réalisé et testé de nombreuses feuilles ou plaques filtrantes suivant l'invention en utilisant des matières luminescentes et fluorescentes actuellement sur le Marché. Le plus souvant, on a utilisé pour chaque type de matière de dopage, des mélanges de plusieurs matières pour optimaliser l'effet recherché. Dans les exemples ci-dessous, ces matières sont désignées par leur dénomination commerciale suivie du nom de leur fabricant car dans beaucoup de cas, la composition chimique est actuellement tenue au secret par les différents producteurs et/ou distributeurs.

Les mélanges suivants ont été réalisés et testés pour former la ou les matières de dopage du premier type (absorption 4000 Å à 5000 Å, réémission entre 5000 Å et 6000 Å) :

| 1er composant | 2ème composant |
|---|---|
| Uvitex OB (Ciba-Geigy)Ⓡ | Jaune Hostasol 3B (Hoechst)Ⓡ |
| Vert Hostasol G (Hoechst)Ⓡ | Jaune Hostasol 3G (Hoechst)Ⓡ |
| Caumarin 102 (Lamda)Ⓡ | Caumarin 153 (Lamda)Ⓡ |

Comme matière de dopage du deuxième type (absorption entre 6000 Å et 7000 Å, réémission au-dessus de 7000 Å), on a utilisé les mélanges suivants :

| 1er composant | 2ème composant |
|---|---|
| Rouge Hostasol 5B (Hoechst)Ⓡ | Rhodamine 700 (Lamda)Ⓡ |
| Rhodamine B (Lamda)Ⓡ | Oxazine 1 (Lamda)Ⓡ |
| Sulforodamine B (Lamda)Ⓡ | Oxazine 750 (Lamda)Ⓡ |
| | Furan 6 (Lamda)Ⓡ |
| | L D S 821 (Lamda)Ⓡ |

sont des produits fabriqués par la Société allemande LAMDA PHYSIK, République Fédérale d'Allemagne. Uvitex est la dénomination commerciale d'un produit fabriqué par la Société française CIBA-GEIGY et Furan 6 celle d'un produit fabriqué par la Société LAMDA PHYSIK également.

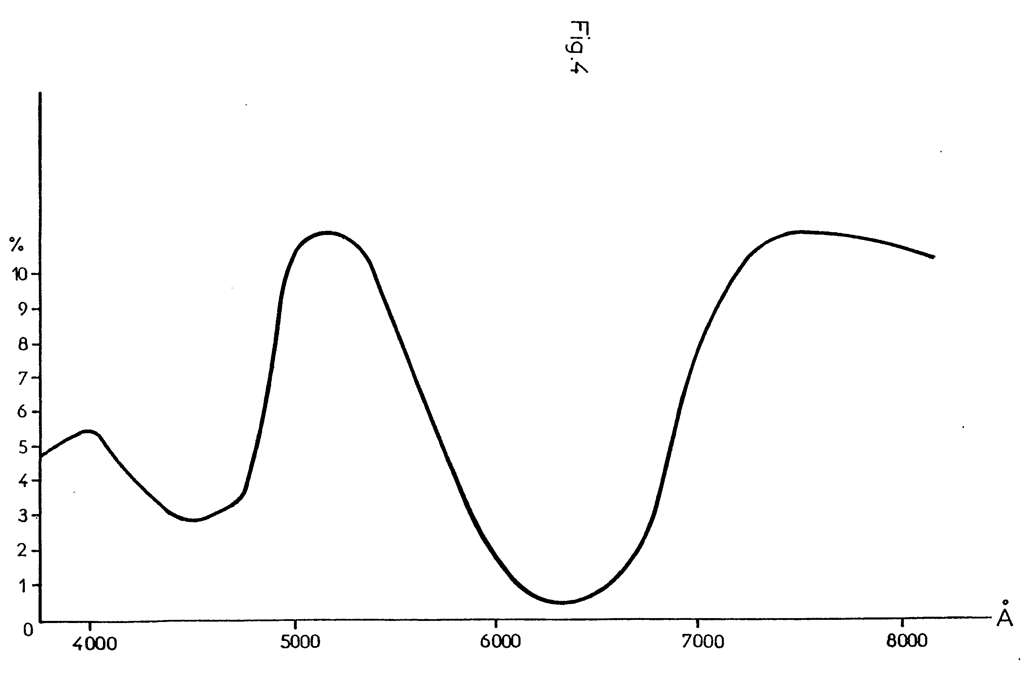

En incorporant des mélanges du premier type et du deuxième type dans une même feuille ou plaque de matières plastiques, on a pu optimaliser l'effet recherché comme représenté à la figure 4.

Cette figure montre une courbe typique représentant le pourcentage de l'énergie photonique en fonction de la longueur d'ondes de la lumière mesurée du côté opposé à une source de lumière d'une feuille ou d'une plaque filtrante selon l'invention. On voit que la plus grande partie de l'énergie est transmise dans les plages entre 5000 Å et 6000 Å et au-dessus de 7000 Å, c'est-à-dire à des longueurs d'ondes n'intervenant pas dans le processus de photosynthèse des plantes. Dans la première plage (4000 Å à 5000 Å) favorable à la photosynthèse, très peu d'énergie est transmise tandis que l'énergie transmise dans la deuxième plage (6000 Å et 7000 Å) favorable à la photosynthèse, est encore plus réduite et quasi négligeable.

Lorsque l'élément filtrant selon l'invention se présente sous la forme d'une feuille souple, il est utilisé comme paillage disposé directement sur le sol. Ce paillage est mis en place lorsque les pousses d'une culture sont sorties du sol et il présente alors des trous pour le passage des pousses. Ces dernières sont alors exposées au rayonnement normal du soleil favorisant leur développement et leur croissance. Le sol entre les pousses reçoit la lumière filtrée à travers la feuille selon l'invention qui ne permet aucun développement de végétation dans ces parties. Dans beaucoup de cas, le paillage peut déjà être mis en place après la mise en terre des semences dune culture. Dans ce cas, il est dépourvu de perforations ou trous. Les pousses de culture sortant de terre sont suffisamment puissantes pour percer le paillage tandis que celui-ci arrête le développement de mauvaises herbes entre les plantes de culture car ces mauvaises herbes ne peuvent pas percer le

EP 0 224 534 B1

paillage.

## Revendications

1. Procédé pour empêcher le développement des plantes sur un plan de culture exposé à un rayonnement lumineux naturel ou artificiel caractérisé en ce qu'il consiste à éliminer dans le spectre du rayonnement lumineux au moins l'une des deux bandes de longueurs d'ondes qui favorisent la photosynthèse et situées la première entre 4200 Å et 4900 Å et la deuxième entre 6000 Å et 7000 Å et à transformer les rayonnement lumineux d'au moins l'une desdites bandes de longueurs d'ondes en un rayonnement dont les longueurs d'ondes ne sont comprises ni dans ladite première ni dans ladite deuxième bande de longueur d'ondes.

2. Elément de filtre actif pour la mise en oeuvre du procédé selon la revendication 1 caractérisé en ce qu'il est constitué d'une matrice constituée d'une matière plastique, notamment en chlorure de polyvinyl ou en polyéthylène contenant au moins une matière luminescente et/ou fluorescente formant une cascade lumineuse consistant en une matière crylique aromatique, pour absorber le rayonnement incident d'au moins une des bandes de longueurs d'ondes 4200 Å-4900 Å et 6000 Å-7000 Å et pour le réemettre dans une bande d'émission de longueurs d'ondes différentes des bandes de longueurs d'ondes 4200 Å-4900 Å et 6000 Å-7000 Å.

3. Elément de filtre actif suivant la revendication 2, caractérisé en que les matières formant ladite "cascade lumineuse" comprennent une première matière cyclique aromatique dont la bande d'absorption couvre des longueurs d'ondes de 4200 Å à 4900 Å et la bande d'émission des longueurs d'ondes de 4900 Å à 6000 Å.

4. Elément de filtre actif suivant la revendication 3, caractérisé en ce que les matières formant ladite "cascade lumineuse" comprennent une deuxième matière cyclique aromatique dont la bande d'absorption couvre des longueurs d'ondes de 6000 Å à 7000 Å et la bande d'émission des longueurs d'ondes supérieures à 7000 Å.

5. Elément de filtre actif suivant la revendication 3 caractérisé en ce que la concentration de ladite première matière cyclique aromatique est d'environ 2 à $5 \times 10^3$ mol/l.

6. Elément de filtre actif suivant les revendications 3 et 4, Caractérisé en ce que la concentration de ladite deuxième matière cyclique aromatique est d'environ, à $5 \times 10^3$ mol/l.

7. Elément de filtre actif suivant l'une quelconque des revendications 3 à 6 caractérisé en ce que ladite première matière cyclique est un mélange de deux composants dont le premier comprend au moins l'un des produits suivants :
Uvitex OB®
Vert Hostasol G®
Caumarin 102®
et le deuxième au moins l'un des produits suivants :
Jaune Hostasol 3B®
Jaune Hostasol 30®
Caumarin 153®

8. Elément de filtre actif suivant l'une quelconque des revendications 4 à 7, caratérisé en ce que ladite matière cyclique est un mélange de deux composants dont le premier comprend au moins l'un des produits suivants :
Rouge Hostasol 5B®
Rhodamine B®
Sulforodamine B®
et le deuxième au moins l'un des produits suivants :
Rhodamine 700®
Oxazine 1®
Furan 6®
L D S 821®

9. Elément de filtre actif suivant l'une quelconque des revendications 2 à 8 caractérisé en ce qu'il est réalisé en polyuréthane.

10. Elément de filtre actif suivant l'une quelconque des revendications 2 à 10 caractérisé en ce qu'il est réalisé en chlorure de polyvinyl.

11. Elément de filtre actif suivant l'une quelconque des revendications 9 ou 10 caractérisé en ce qu'il présente une épaisseur de l'ordre de 50 à 100 μ.

5

**Ansprüche**

1. Verfahren zum Unterbinden der Entwicklung der Pflanzen auf einer Bebauungsfläche, die einer natürlichen oder künstlichen Lichtbestrahlung ausgesetzt ist, dadurch gekennzeichnet, daß es darin besteht, im Lichtstrahlenspektrum wenigstens einen der beiden Bereiche der Wellenlängen, die die Photosynthese begünstigen und wobei der erste zwischen 4200 Å und 4900 Å und der zweite zwischen 6000 Å und 7000 Å liegt, zu eliminieren und die Lichtstrahlungen wenigstens eines der Bereiche der Wellenlängen in eine Strahlung umzuwandeln, deren Wellenlängen weder in dem ersten noch in dem zweiten Bereich der Wellenlängen enthalten sind.

2. Aktivfilter-Element zur Anwendung des Verfahrens nach Anspruch 1, dadurch gekennzeichnet, daß es aus einer Matrix gebildet ist, die aus einem Kunststoff, insbesondere aus Polyvinylchlorid oder Polyethylen, gebildet ist, der wenigstens ein lumineszierendes und/oder fluoreszierendes Material enthält, das eine Lichtkaskade bildet, die aus einem zyklischen aromatischen Material besteht, um die einfallende Strahlung wenigstens eines der Bereiche der Wellenlängen 4200 Å-4900 Å und 6000 Å-7000 Å zu absorbieren und, um sie in einer Emissionsbande mit Wellenlängen, die von den Bereichen der Wellenlängen 4200 Å-4900 Å und 6000 Å-7000 Å verschieden sind, wiederauszustrahlen.

3. Aktivfilter-Element gemäß Anspruch 2, dadurch gekennzeichnet, daß die Materialien, die die "Lichtkaskade" bilden, ein erstes zyklisches aromatisches Material umfassen, dessen Absorptionsbande Wellenlängen von 4200 Å bis 4900 Å und dessen Emissionsbande Wellenlängen von 4900 Å bis 6000 Å deckt.

4. Aktivfilter-Element gemäß Anspruch 3, dadurch gekennzeichnet, daß die Materialien, die die "Lichtkaskade" bilden, ein zweites zyklisches aromatisches Material umfassen, dessen Absorptionsbande Wellenlängen von 6000 Å bis 7000 Å und dessen Emissionsbande Wellenlängen über 7000 Å deckt.

5. Aktivfilter-Element nach Anspruch 3, dadurch gekennzeichnet, daß die Konzentration des ersten zyklischen aromatischen Materials etwa 2 bis 5 × 10$^{-3}$ Mol/l beträgt.

6. Aktivfilter-Element nach den Ansprüchen 3 und 4, dadurch gekennzeichnet, daß die Konzentration des zweiten zyklischen aromatischen Materials etwa 2 bis 5 × 10$^{-3}$ Mol/l beträgt.

7. Aktivfilter-Element nach einem der Ansprüche 3 bis 6, dadurch gekennzeichnet, daß das erste zyklische Material eine Mischung von zwei Komponenten ist, wobei die erste wenigstens eines der folgenden Produkte:
UVITEX OB®
Vert Hostasol G®
Caumarin 102®
und die zweite wenigstens eines der folgenden Produkte :
Jaune Hostasol 3B®
Jaune Hostasol 3Q®
Caumarin 153®
umfaßt.

8. Aktivfilter-Element nach einem der Ansprüche 4 bis 7, dadurch gekennzeichnet, daß das zyklische Material eine Mischung von zwei Komponenten ist, wobei die erste wenigstens eines der folgenden Produkte :
Rouge Hostasol 5B®
Rhodamine B®
Sulforodamin B®
und die zweite wenigstens eines der folgenden Produkte
Rhodamine 700®
Oxazine 1®
Oxazin 750®
Furan 6®
L D S 821®
umfaßt.

9. Aktivfilter-Element nach einem der Ansprüche 2 bis 8, dadurch gekennzeichnet, daß es aus Polyurethan hergestellt ist.

10. Aktivfilter-Element nach einem der Ansprüche 2 bis 10, dadurch gekennzeichnet, daß es aus Polyvinylchlorid hergestellt ist.

11. Aktivfilter-Element nach einem der Ansprüche 9 oder 10, dadurch gekennzeichnet, daß es eine Dicke im Bereich von 50 bis 100 μ aufweist.

## Claims

1. Process for preventing the development of plants on a culture meduim exposed to natural or artificial light radiation, characterized in that it comprises eliminating in the spectrum of the light radiation at least one of the two wavelength bands favouring photosynthesis, whereby the first is between 4200 and 4900 Å and the second between 6000 and 7000 Å and transforming the light radiation of at least one of said wavelength bands into a radiation, whose wavelengths are not included either in said first band or in said second band.

2. Active filter element for performing the process according to claim 1, characterized in that it is constituted by a matrix formed from a plastics material, particularly polyvinyl chloride or polyethylene containing at least one luminescent and/or fluorescent material forming a light cascade consisting of an aromatic cyclic material, in order to absorb the incident radiation of at least one of the wavelength bands 4200 to 4900 Å and 6000 to 7000 Å and in order to reemit in a wavelength emission band differing from the wavelength bands 4200 to 4900 Å and 6000 and 7000 Å.

3. Active filter element according to claim 2, characterized in that the materials forming said "light cascade" consist of a first aromatic cyclic material, whose absorption band covers wavelengths of 4200 to 4900 Å and the emission band of the wavelengths 4900 to 6000 Å.

4. Active filter element according to claim 3, characterized in that the materials forming said "light cascade" consist of a second aromatic cyclic material, whose absorption bands covers the wavelengths from 6000 to 7000 Å and the emission band of wavelengths above 7000 Å.

5. Active filter element according to claim 3, characterized in that the concentration of said first aromatic cyclic material is approximately 2 to $5 \times 10^{-3}$ mole/l.

6. Active filter element according to claims 3 and 4, characterized in that the concentration of said second aromatic cyclic material is approximately 2 to $5 \times 10^{-3}$ mole/l.

7. Active filter element according to any one of the claims 3 to 6, characterized in that said first cyclic material is a mixture of two components, whereof the first comprises at least one of the following products :

UVITEX OB
Vert Hostasol G
Caumarin 102

and the second at least one of the following products :

Jaune Hostasol 3B
Jaune Hostasol 30
Caumarin 153

8. Active filter element according to any one of the claims 4 to 7, characterized in that said cyclic material is a mixture of two components, whereof the first comprises at least one of the following products :

Rouge Hostasol 5B
Rhodamine B
Sulforodamine B

and the second at least one of the following products :

Rhodamine 700
Oxazine 1
Oxazine 750
Furan 6
L D S 821

9. Active filter element according to any one of the claims 2 to 8, characterized in that it is made from polyurethane.

10. Active filter element according to any one of the claims 2 to 10, characterized in that it is made from polyvinyl chloride.

11. Active filter element according to any one of the claims 9 or 10, characterized in that it has a thickness of approximately 50 to 100 μ.

Fig.1

Fig.3

Fig.2

Fig.4

EP 0 224 534 B1